# EUROPEAN PATENT SPECIFICATION

(11) **EP 3 471 501 B1**
(45) Date of publication and mention of the grant of the patent: **17.02.2021**
(21) Application number: 17810303.2
(22) Date of filing: 06.06.2017
(51) Int. Cl.: H04W 8/00, H04W 76/10, H04W 84/18

(54) **SYSTEM FOR COMMUNICATION ESTABLISHMENT BETWEEN A MASTER DEVICE AND A PLURALITY OF SLAVE DEVICES**
SYSTEM ZUM VERBINDUNGSAUFBAU ZWISCHEN EINER MASTER-VORRICHTUNG UND MEHREREN SLAVE-VORRICHTUNGEN
SYSTÈME POUR L'ÉTABLISSEMENT DE COMMUNICATION ENTRE UN DISPOSITIF MAÎTRE ET UNE PLURALITÉ DE DISPOSITIFS ESCLAVES

(30) Priority: 08.06.2016 JP 2016114192
(43) Date of publication of application: 17.04.2019
(73) Proprietor: Showa Denko Materials Co., Ltd., Tokyo 100-6606 (JP)
(72) Inventor: YAMAZOE, Takanori, Tokyo 100-8280 (JP); SAKABE, Kei, Tokyo 100-8280 (JP); ARITA, Hiroshi, Tokyo 100-6606 (JP)
(74) Representative: MERH-IP Matias Erny Reichl Hoffmann Patentanwälte PartG mbB
(86) International application number: PCT/JP2017/020956
(87) International publication number: WO 2017/213128

(56) References cited:
- GB-A- 2 408 896
- JP-A- 2004 200 940
- JP-A- 2004 274 520
- JP-A- 2010 245 975
- "BLUETOOTH SPECIFICATION; VERSION 1.1; CORE", SPECIFICATION OF THE BLUETOOTH SYSTEM, 22 February 2001 (2001-02-22), XP002285385,
- CHING LAW ET AL: "Performance of a new Bluetooth scatternet formation protocol", PROCEEDINGS OF MOBIHOC 2001. ACM SYMPOSIUM ON MOBILE AD HOC NETWORKING AND COMPUTING - 4-5 OCT. 2001 - LONG BEACH, CA, USA, ACM, NEW YORK, NY, USA, 1 October 2001 (2001-10-01), pages 183-192, XP058357551, DOI: 10.1145/501441.501442 ISBN: 978-1-58113-428-5

## Description

### TECHNICAL FIELD

The present invention relates to a wireless communication system performing wireless communication between a master device and slave devices.

### BACKGROUND ART

Communication systems including a master device and a plurality of slave devices for wired communication one master device to one slave device through cables, have been used conventionally. Such a wire communication system requires a high installation cost in wirings and connection of wirings requires much man power. Then, a wireless communication system for wireless communication between a master device and a plurality of slave device in place of the wire communication system, has been proposed.

For example, Patent Document 1 disclosed as follows:
In a wireless communication performed between a vehicle and a mobile device, the vehicle periodically receives two channels 1 and 2. When it is determined that noise exists in the channel 1, the channel 2 is used on a priority basis.

Document 2 disclosed as follows:
When a wireless communication device starts communication with a wireless base station, the wireless communicating device receives a signal from the wireless communication base station in a predetermined frequency hopping pattern while timing synchronization is performed, and replaces a frequency having interference with a spare frequency.

### PRIOR ART

### PATENT DOCUMENT

PATENT DOCUMENT1: JP2009-17.7767
PATENT DOCUMENT2: JP2005-33416

### SUMMARY OF INVENTION

### PROBLEM TO BE SOLVED BY INVENTION

PATENT DOCUMENT1 disclosed that a technology for improving a communication quality in a state that communication has been established between the vehicle and the mobile device. However, PATENT DOCUMENT1 fails to disclose a technology to establish a connection of wireless communication, i.e., a technology of performing initial connection.

In PATENT DOCUMENT2, a frequency of interference in communication is calculated while timing synchronization is performed between the wireless base station and a wireless communication device. This invites increase in cost because circuits or the like for timing synchronization should be installed in the master device and the slave devices.

The document "BLUETOOTH SPECIFICATION; VERSION 1.1; CORE", SPECIFICATION OF THE BLUETOOTH SYSTEM, 22 February 2001 (2001-02-22), pages 1-13, 94-123, 216-222, 1064-1069 discloses a process for establishing a communication between the Bluetooth master device and each of a plurality of Bluetooth slave devices.

A problem in the present invention is to provide a communication system at a low cost for establishing the wireless communication connection.

### MEANS FOR SOLVING PROBLEM

The invention is set out in the appended claims. To solve the problem, an aspect of the present invention provides a wireless communication system comprising:
a master device and a plurality of slave devices capable of wireless communication with the master device,
wherein a plurality of frequencies for wireless communication between the master device and the slave devices are set to each of the master device and the slave devices ;
wherein as a communication establishment process for establishing communication between the master device and each of the slave devices,
the master device wirelessly transmits a packet signal to each of the slave devices, while switching is made among a plurality of the frequencies at a first cycle;
each of the slave devices performs a switching process of switching among a plurality of the frequencies usable as an own receiving frequency at a second cycle shorter than the first cycle until the slave device can receive the packet signal from the master device;
upon reception of the packet signal from the master device, each of the slave devices wirelessly transmits a response signal to the master device in response to the response request signal from the master device after the reception of the packet signal; and
when the master device receives the response signal from each of the slave devices, the master device determines that the communication has established with each of the slave devices.

### ADVANTAGEOUS EFFECT OF INVENTION

According to the present invention, a wireless communication system can be provided, which requires a low cost for establishing the wireless communication connection.

### BRIEF DESCRIPTION OF DRAWINGS

Fig. 1 is a block diagram of a wireless communication system according to a first embodiment of the present invention.
Fig. 2 is an illustration showing a process executed by a host system controller, a master device, and slave devices.
Fig. 3 is an illustration showing a process executed by a host system controller, a master device, and slave devices.
Fig. 4 is a time chart of wireless communication between the master device and the slave devices A and B and shows a state that the slave device A receives a packet signal and the slave device B has not being able to receive the packet signal.
Fig. 5 is a time chart of wireless communication between the master device and the slave devices A and B and shows a state that both the slave devices A and B have received the packet signal.
Fig. 6 is an illustration showing a process executed by the master device and the slave devices in a wireless communication system according to a second embodiment of the present invention.
Fig. 7 is a time chart of the wireless communication between the master device and slave devices and shows a state that timing at which each of slave devices transmits a response signal, is shifted.
Fig. 8 is a time chart of wireless communication between the master device and the slave devices A and B in a wireless communication system according to a modification embodiment of the present invention.
Fig. 9 is a block diagram of a wire communication system of a comparative example.

### MODES FOR CARRYING OUT INVENTION

### <<First embodiment>>

### <Configuration of wireless communication system>

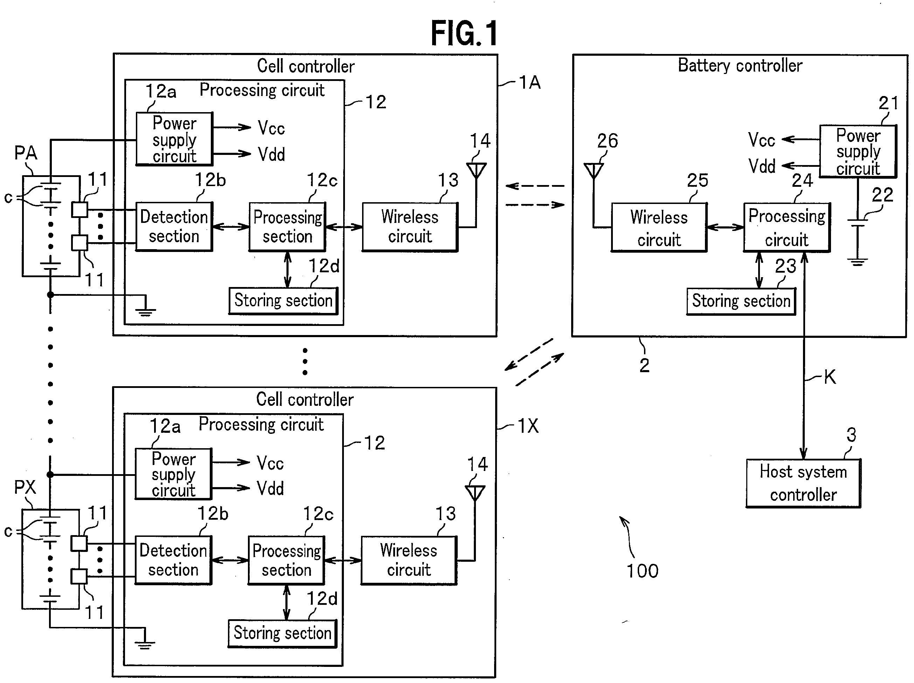

Fig. 1 is a block diagram of a wireless communication system 100 according to a first embodiment of the present invention.

The wireless communication system 100 is a system for performing wireless communication between a battery controller 2 as a master device, a plurality of cell controllers 1A, ---, to 1X as slave devices. As shown in Fig. 1, the wireless communication system 100 includes cell controllers 1A, ---, to 1X, the battery controller 2, and a host system controller (controller) 3.

Each of the cell controllers 1A, ---, to 1X as a slave device has a function of transmitting information including measured value of a voltage, a current, a temperature, etc of a battery cell group in which a battery cells c are connected in series (or individual cell c). The battery cell groups housed in battery packages PA to PX are used to, for example level outputs of wind power generation or solar power generation. However, the present invention is not limited to this.

As shown in Fig. 1, the cell controller 1A includes at least a measuring device 11, a processing circuit 12, a wireless circuit 13, and an antenna 14.

The measuring device 11 is a sensor for detecting a voltage, a current, a temperature, etc. of the battery cell group and installed in the battery package PA. The processing circuit 12 is a circuit for performing a predetermined process based on the measurement result of the measuring device 11 and includes a power supply circuit 12a, a detection section 12b, a processing section 12c, and a storing section 12d.

The power supply circuit 12a is a circuit for generating an operational voltage for respective circuits, i.e., a power supply voltage V_{cc} with respect to a voltage Vdd on the negative side, using the battery cell group as a power source. The detection section 12b is an A/D converter which obtains detection information of the battery cell c based on the measurement value of the measuring device 11. The processing section 12c is a CPU ((Central Processing Unit) diagnoses a state of the battery cell c (a charged state, a deterioration state, presence/absent of overcurent and overvoltage) based on the detection information inputted from the detection section 12b. The storing section 12d stores identification information of the cell controller 1A, etc. in addition to the above-described detection information and diagnosis result.

The wireless circuit 13 is a circuit for outputting predetermined information read out from the storing section 12d by the processing section 12c to the antenna 14. The wireless circuit 13 has a function of demodulating the radio signal received by the antenna 14 and supplying the demodulated signal to the processing section 12c. The antenna transmits and receives the wireless signal and is connected to the wireless circuit 13.

Other cell controllers such as a cell controller 1X have the same configuration as the cell controller 1A.

The battery controller 2, which is a master device, has functions of performing wireless communication with the cell controllers 1A, ---, to 1X, which are slave devices, and obtaining the above-described information (the detection information and the diagnosis result of the battery cell c, identification information of the cell controllers 1A, ---, to 1X, etc) from the cell controllers 1A, ---, to 1X. As shown in Fig. 1, the battery controller 2 includes a power supply circuit 21, a battery 22, a storing section 23, a processing section 24, a wireless circuit 25, and an antenna 26.

The power supply circuit 21 is a circuit for generating an operational voltage for respective circuits. The battery 22 is a power source for the power supply circuit 21 and connected to the power supply circuit 21. Accordingly, it is also possible to supply an electric power to the power supply circuit 21 from an external power supply (not shown).

The storing section 23 stores a predetermined program executed by the processing circuit 24, the identification information, etc. of the cell controllers 1A, ---, to 1X. More specifically, on a side of the battery controller 2 (master device side), the number of the cell controllers 1A, ---, to 1X (respective slave devices) and identification information of the cell controllers 1A, ---, to 1X are grasped.

The processing circuit 24 has a function of a "communication establishment process" with the cell controllers 1A, ---, to 1X in response to a command from the host system controller 3 described later. The "communication establishment process" described above is a process of establishing wireless communication between the battery controller 2 and each of the cell controllers 1A, ---, to 1X, i.e., a process of performing an initial connection.

The processing section 24 has a function of obtaining information about the battery cells c by periodically performing wireless communication with the cell controllers 1A, ---, to 1X after performing the "communication establishment process".

The wireless circuit 25 is a circuit which supplies predetermined information read out from the storing section 23 by the processing section 24 to the antenna 26 as a wireless signal. The wireless circuit 25 has a function of demodulating the wireless signal received by the antenna 26 and supplying the demodulated signal to the processing section 24. The antenna 26 is for transmitting and receiving the wireless signal and connected to the wireless circuit 25.

The host system controller 3 is configured (not shown) with electronic circuits (not shown) including a CPU (Central Processing Unit), a ROM (Read Only Memory), a RAM (Random Access Memory), and various types of interfaces, etc. Further, the host system controller 3 is configured to perform various processes by the CPU after loading on the RAM the program stored in the ROM. The host system controller 3 is connected through a wiring K to the battery controller 2 and configured to transmit a starting command for "communication establishment process" (a start command for the initial connection) to the battery controller 2.

Hereinafter, a description is made as an example in which the wireless communication system 100 includes two of the cell controllers 1A, 1B. Further, the battery controller 2 is described as "master device" and the two cell controllers 1A, 1B as "slave devices A, B".

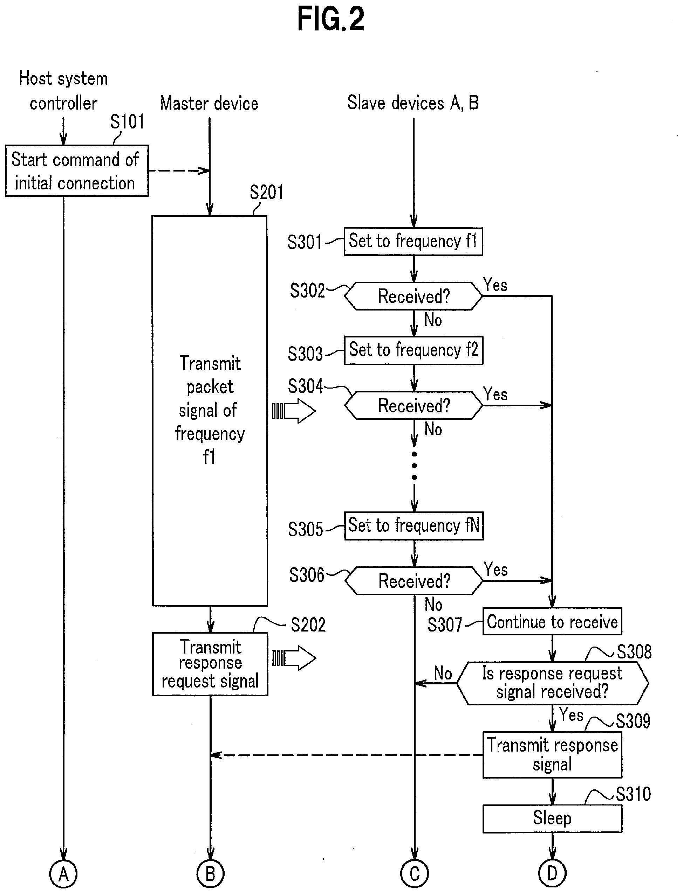

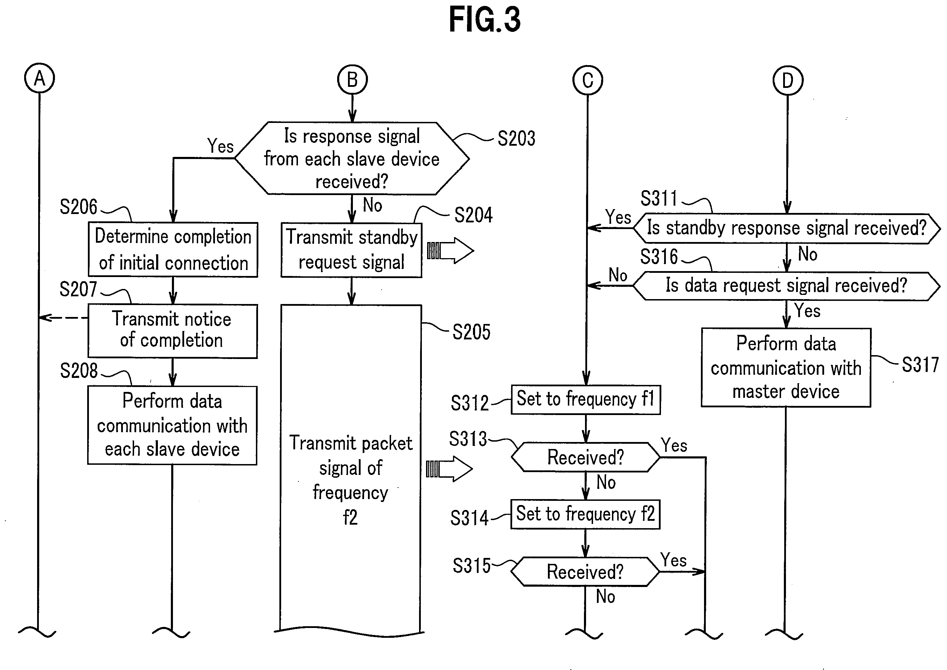

Figs. 2 and 3 are illustrations showing processes executed by the host system controller, the master device, and the slave devices A, B. In Figs. 2 and 3, the processes of the slave devices A and B are integrally shown. Actually, the processes of the slave devices A, B are performed individually.

In a step S101, the host system controller 3 transits the start command of the initial connection to the master device. More specifically, the host system controller 3 transmits the start command of the "communication establishment process" described above to the master device. The process of the step S101 is executed at, for example, start-up of the battery controller 2, which is a master device, or resetting after stop of the battery controller 2.

Upon reception of the start command for the initial connection from the host system controller 3, the master device transmits (broadcasts) packet signals of a frequency f1 to the slave devices A, B.

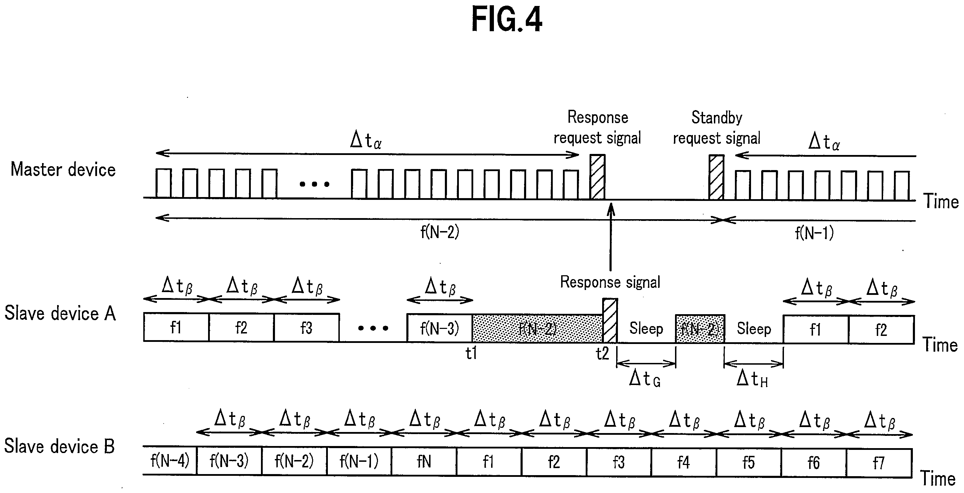

N of frequencies f1, f2, to fN are set to each of the master device and the slave devices A, B to perform wireless communication between the master device and the slave devices A, B. While successively switching these frequencies f1, f2, ---, to fN in a first cycle Δt_{α} (see Fig. 4), the master device wirelessly transmits the packet signals to the slave devices A, B, respectively. In a step S201 in Fig. 2, first, the master device tries to have the initial connection with the slave devices A, B by continuously broadcasting the packet signals of the frequency f1.

On the other hand, the slave devices A, B perform a "switching process" in which a plurality of the frequencies f1, f2, ---, to fN used for its own device are successively switched at a second cycle Δt_{β} which is shorter than the first cycle Δt_{α} (see Fig. 4). The "switching process" will be described in explanation of the following steps S301 to S306.

In the step S301, each of the slave devices A, B sets the receiving frequency of the packet signal to the frequency f1. Though not shown in Fig. 2, a state that the receiving frequency in the slave devices is set to the frequency f1 which continues for a period of the second cycle Δt_{β} (see Fig. 4).

Hereinafter, out of the slave devices A and B, the process of the slave device A is mainly described below. However, the process of a slave device B is similar to this.

In a step S302, the slave device A determines whether or not the slave device A has been able to receive the packet signal from the master device at the frequency f1. When the slave device A has been able to receive the packet signal at the frequency f1 (Yes in the step S302), processing of the slave device A proceeds to a step S307. On the other hand, when the slave device A has not being able to receive the packet signal at the frequency f1 (No in the step S302), the processing of the slave device A proceeds to a step S303.

In the step S303, the slave device A sets the receiving frequency of the packet signal to a frequency f2.

In a step S304, the slave device A determines whether or not the slave device A has been able to receive the packet signal from the master device at the frequency f2. When the slave device A could receive the packet signal at the frequency f2 (Yes in the step S304), processing of the slave device A proceeds to a step S307. On the other hand, when the slave device A has not been able to receive the packet signal at the frequency f2 (No in the step S304), though it is not shown in Fig. 2, the processing of the slave device A switches the receiving frequency to a frequency f3. As described above, the slave device A tries to receive the packet signal while switching the receiving frequency of its own device at a higher speed than the master device.

In a step S305, the slave device A sets the receiving frequency to a frequency fN.

In a step S306, the slave device A determines whether or not the slave device A has been able to receive the packet signal at the frequency fN. When the slave device A has been able to receive the packet signal at the frequency fN (Yes, in the step S306), processing of the slave device A proceeds to the step S307. On the other hand, when the slave device A has not been able to receive the packet signal at the frequency fN (No, in the step S306), the processing of the slave device A proceeds to a step S312 in Fig. 3.

Fig. 4 is a time chart of wireless communication between the master device and the slave devices A and B and shows a state that the slave device A receives a packet signal and the slave device B has not being able to receive the packet signal.

As shown in Fig. 4, the master device slowly switch the frequency of the packet signal at the first cycle Δt_{α}, and the slave devices A, B switch the receiving frequency of the packet signal at a high speed at the second cycle Δt_{β}. Such switching of the frequencies is performed asynchronously between the master device and the slave devices A, B and between the slave devices A and B.

Further, the first cycle Δt_{α} and the second cycle Δt_{β} are set so that the slave devices A, B can switch all frequencies f1, f2 to fN while the master device continuously transmits the packet signals of the frequency fk (k is a given natural number). More specifically, there is a relation of the first cycle Δt_{α} > N × second cycle Δt_{β}.

Regarding this, it is also possible that the switching is enabled at shipping from a factory in the slave devices A, B, i.e., the cell controllers 1A, 1B. Alternatively, it is possible to start switching of the receiving frequency by a switching operation by an operator.

In the step S307 in Fig. 2, the slave device A continues receiving from the master device using the receiving frequency when the packet signal can be received. In other words, when the slave device A receives a predetermined frequency from the master device, the slave device A continuously uses the predetermined frequency as its own receiving frequency at least until the slave device receives a response request signal from the master device. This makes it possible to receive the response request signal on the side of the slave device A when the master device transmits the response request signal.

In the example shown in Fig. 4, until the slave device A receives the response request signal from the master device after receiving the packet signal at the frequency f(N - 2) from the master device, the slave device A continuously uses the frequency f(N - 2) as the receiving frequency (see time t1 to t2).

On the other hand, the slave device B cannot to receive the packet signal, so that the switching process of the frequencies f1, f1, ---, to fN is repeated. For example, if the slave device B is installed at a Null point at which the wireless signals are cancelled out each other, or if the slave device B receive an influence of a wireless signal leaked out from another wireless system (not shown), the slave device B may be unable to receive the packet signal. Depending on change in the circumstance, the slave device B may become able to receive the packet signal.

Returning to Fig. 2 again, description is continued.

After the master device transmits the packet signal of the frequency f1 in the step S201, the master device transmits (broadcasts) the response request signal at the frequency f1 to each of the slave devices A, B in a step S202.

The slave device A, which continues receiving in the step S307, determines in a step S308 whether or not the response request signal has been received from the master device. When the slave device A receives the response request signal from the master device (Yes in S308), processing of the slave device A proceeds to a step S309.

The slave device A transmits the response signal to the master device wirelessly in the step S309.

The slave device A starts sleeping in S310. The above-described "sleeping" is a process of temporarily stopping transmission and reception of the wireless signals. Though omission is made in Fig. 2, "sleeping" in the step S310 is continued only for the first predetermined interval Δt_{G} shown in Fig. 4. The first predetermined interval Δt_{G} is a time interval in which the sleeping is continued from time when the response signal is transmitted to the master device to have setting to enable to receive a standby request signal described later (or a data request signal) from the master device. As described above, once sleeping is made after transmitting the response signal, This provides saving energy of the slave device A.

After transmitting the response request signal in the step S202 in Fig. 2, the master device determines in a step S203 in Fig. 3 whether or not the response signals have been received from the slave devices A, B, respectively. Out of the slave devices A, B, if there is a slave device which does not transmits the response signal (No, in the step S203), processing of the master device proceeds to a step S204.

The master device transmits (broadcasts) the standby request signal to the slave device A which has transmitted the response signal. The above-described "standby request signal" is a signal requiring the slave device A having transmitted the response signal to perform the switching process again to prepare to receive the packet signal after that. Transmitting the standby request signal can cause the slave device A having already transmitted the response signal to perform the switching process of the frequency again.

The master device transmits the packet signal of the frequency f2 in a step S205. Though omission is made in Fig. 3, when the wireless communication is not established at the frequency f2, the frequency of the packet signal is successively changed on the side of the master device in such an order of frequencies f3, f4,---,fN, f1, f2,---fN,---.

The slave device A, which has been sleeping in the step S310 in Fig. 2, continues sleeping for a first predetermined interval Δt_{G} as described above, and after this, determines whether or not the slave device A has received a standby request signal from the master device in a step S311 in Fig. 3. A receiving frequency at this instance is the same as the frequency used for transmitting the response signal in the step S309.

When the slave device A has received the standby request signal from the master device in the step S311 (Yes in the step S311), processing of the slave device A proceeds to the step S312 in Fig. 3. In the steps S312 to S315, the slave device A performs the switching process of the frequency again to switch the receiving frequency to frequencies f1, f2, ---, to fN.

Though not shown in Fig. 3, it is also possible to resume performing the switching process of the frequency after the slave device A sleeps only for a predetermined interval ΔtH (see Fig. 4) when the slave device A receives the standby request signal. At this phase, communication between the master device 1 and the slave devices A, B has not been established. This is because the side of the slave device B cannot receive the packet signal, i.e., the slave device B has not transmitted the response signal toward the master device.

In the step S203 in Fig. 3, when receiving response signals from the slave devices A, B (Yes in the S203), the master device determines that the initial connection has completed between the master device and the slave devices A, B in a step S206. In other words, when receiving the response signals from the respective slave devices A, B, the master device determines that communication between the slave devices A and B has been established.

The "communication establishment process" for establishing the communication between the master device and each of the slave devices A, B includes the processing in the steps S201 to S206 and the steps S301 to the S315 shown in Figs. 2 and 3.

Next, in the step S207, the master device transmits a completion notice of the initial connection to the host system controller 3. Accordingly, a manager of the wireless communication system 100 can grasp the completion of the initial connection between the master device and the slave devices A, B.

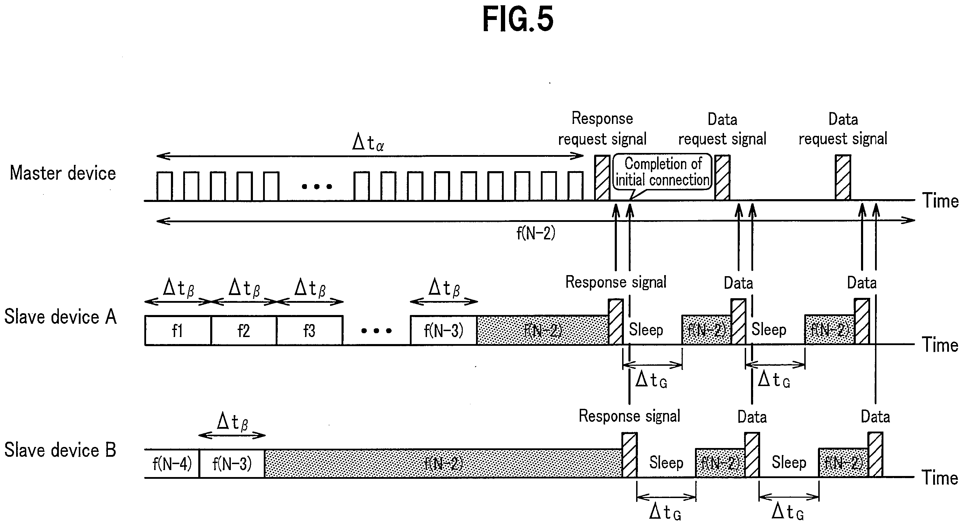

Fig. 5 is a time charts of the wireless communication between the master device and the slave devices A, B and indicates a case where both the slave devices A, B receive the packet signal.

In the example shown in Fig. 5, in response to the response request signal from the master device, both the slave devices A, B transmit the response signals at a frequency f(N-2) to the master device. As a result, on the side of the master device, it is determined that the wireless communication has been established between the master device and the slave devices A, B (Yes in S203 and S206).

In a step S208 in Fig. 3, the master device performs data communication with the slave devices A, B. Though omission is made in Fig. 3, upon performing data communication, the master device transmits (broadcasts) a data request signal to each of the slave devices A, B.

On the side of the slave device, when a standby request signal cannot be received from the master device in the step S311 (No in the step S311), processing of the slave device A proceeds to a step S316.

The slave device A determines whether or not the slave device A has received the data request signal from the master device in the step S316. When the slave device A has received the data request signal (Yes in the step S316), processing of a slave device A proceeds to a step S317.

In the step S317, the slave device A performs a data communication with the master device.

As shown in Fig. 5, after completion of the initial connection, the data communication is periodically performed between the master device and the slave devices A, B. In the example shown in Fig. 5, the slave devices A, B perform sleeping (S310) after transmitting the response signals at the frequency f(N - 2)(S309). After sleeping for the first predetermined interval Δt_{G}, the slave devices A, B set the receiving frequency to the frequency f(N-2) and wait for the data request signal from the master device (or standby request signal) (S311,S316).

When each of the slave devices A, B receives the data request signal from the master device in the step S316 in Fig. 3 (Yes in the step S316), in response to this, each of the slave devices A and B sets the receiving frequency to the frequency f(N-2), and transmits data including the voltage, the current, the temperature, the charged state, etc of the battery cell c (see Fig. 1) to the master device ((S317). Further, when there is an error in the battery cell c, it is also possible that the master device inform of this the host system controller 3.

In the example shown in Fig. 5, using the frequency f(N-2) when the initial connection can be established, the data communication after this is performed. However, the invention is not limited to this. More specifically, it is also possible to properly change the frequency used for the data communication after completion of the initial connection to improve the communication quality.

### <Advantageous effect>

In the present embodiment, the master device transmits the packet signals to the slave devices A, B while the frequency is switched at the first interval Δt_{α}, and the slave devices A, B switch the receiving frequency at the second Δt_{β} which is shorter than the above-described first interval Δt_{α}. As described above, since the communication establishing process is performed asynchronously, the frequency used for the wireless communication can be suitably set in accordance with installation circumferences of the master device and the slave devices A, B. Further, it is possible to handle addition or replacement of the battery packages housing a plurality of the battery cells c (see Fig. 1) easily and flexibly.

Further, as described above, because the communication communication establishment process is performed asynchronously, it is not necessary to install circuits for synchronous operation in the master device or the slave devices A, B. According to the present embodiment, it is possible to reduce a manufacturing cost of the master device and the slave devices A, B from that of the conventional devices. Further, because the communication communication establishment process is performed in response to the command from the host system controller 3, it is possible to make the cost for the communication establishment lower than that in the case where an operator manually set the frequency, and to reduce the man-hour of the operator for the communication establishment significantly.

Further, in the present embodiment in which the master device and the slave devices A, B perform the wireless communication, a cost for wirings can be reduced from the conventional technology in which the communication was made using cables.

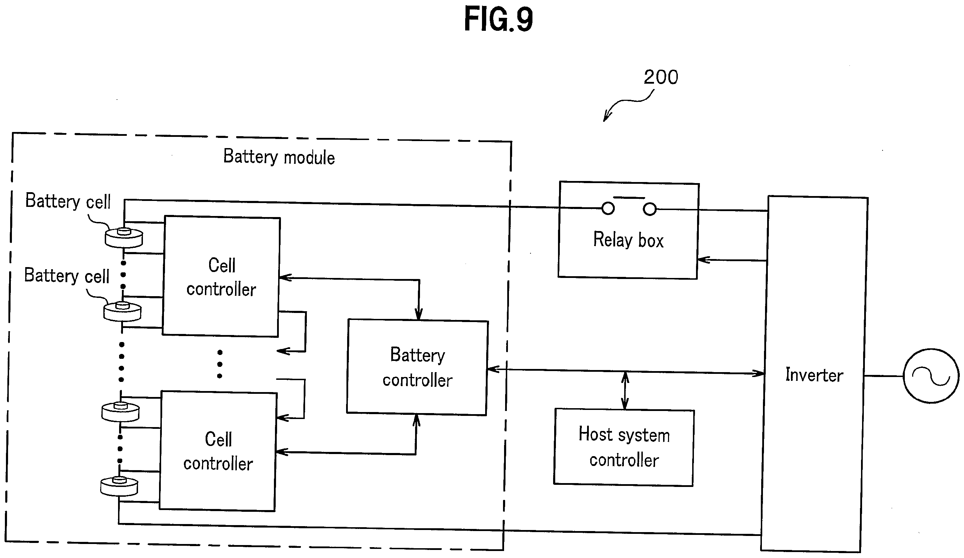

Fig. 9 is a block diagram of a wire communication system 200 of a comparative example.

In the communication system 200 shown in Fig. 9, though a detailed description is omitted, a battery controller (master device) is wired-connected through wiring to the cell controllers (slave devices). For example, in a natural energy power generation system having a large scale, a large number (for example, thousands, tens of millions) of battery cells are installed to level outputs, and cell controllers are installed accordingly. In the wired communication system shown in Fig. 9, a cost for wiring for connecting the battery controller to the cell controller is high, and a much man-hour is required for the wiring.

Contrarily to this, the present embodiment provides the system for wireless communication between the master device and each of the slave devices, so that a cost for wirings is low and it is possible to easy perform the initial connection between the master device and each of the slave devices.

### «Second embodiment»

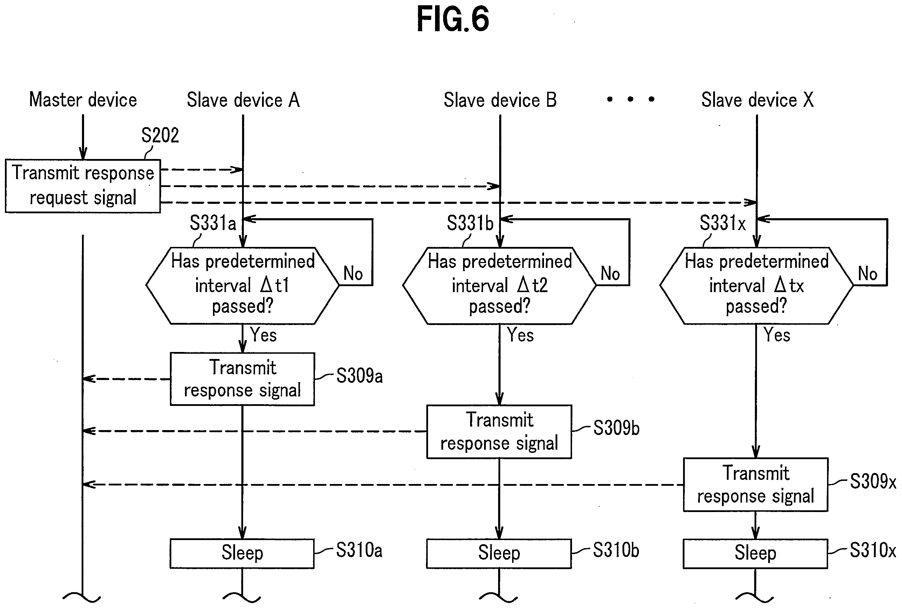

The second embodiment is different from the first embodiment in that the interval from reception of the response request signal from the master device to transmission of the response signal is different among the slave devices A, B, ---, to X (see Fig. 6). However other configurations and operations are the same as those of the first embodiment. Accordingly, only a part which is different from the first embodiment is described below and a description of the duplicated part is omitted.

Fig. 6 is an illustration showing a process executed by the master device and the slave devices A, B, ---, to X in a wireless communication system according to a second embodiment of the present invention.

The step S202 in Fig. 6 corresponds to the step S202 (see Fig. 2) described in the first embodiment. Further, steps S309a, S310a correspond to the steps S309, S310 (see Fig. 2) in Fig. 2 described in the first embodiment, respectively. Further, steps S309b, S310b, S309x, and S310x have similar correspondence.

In the step S202 in Fig. 6, the master device transmits (broadcasts) a response request signal to the slave devices A, B, --- to X.

The slave device A determines in a step S331a whether or not a predetermined interval Δt1 has passed from reception of the response request signal. When the predetermined interval Δt1 has not passed from the reception of the response request signal (No in the step S331a), the slave device A repeats the process in the step S331a. On the other hand, when the predetermined interval Δt1 has passed from the reception of the response request signal (Yes in the step S331a), processing of the slave device A proceeds to the step S309a.

The slave device A transmits the response signal to the master device. After this, the slave device A starts sleeping in the step S310a.

On the other hand, when a predetermined interval Δt2 has passed from the reception of the response request signal (Yes in the step S331b), a slave device B transmits the response signal to the master device (S309b).

Further, when the interval Δtx has passed from the reception of the response request signal from the master device (Yes in a step S331x), the slave device X transmits a response signal (S309x).

Here, the predetermined intervals Δt1, Δt2, ---, to Δtx from the reception of the response request signal to transmission of the response signal are different among the slave devices A, B, ---, to X. This prevents collision (interference) between the response signals transmitted to the master device from the slave devices A, B, --- to X.

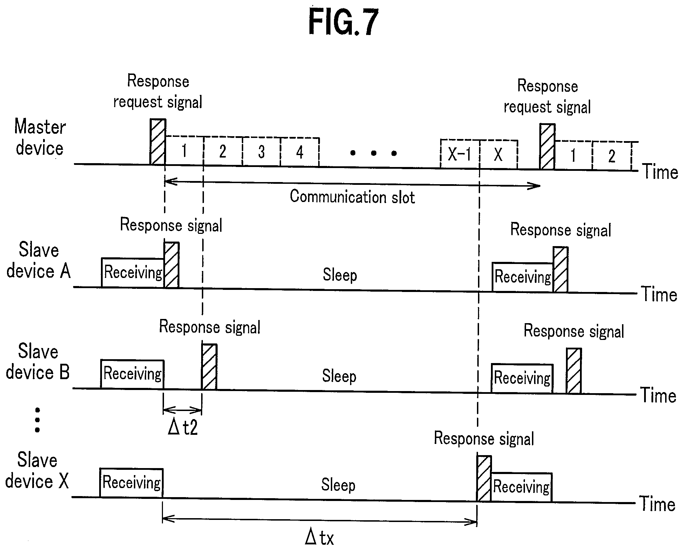

Fig. 7 is a time chart of the wireless communication between the master device and slave devices A, B, ---, to X and shows a state that timing at which each slave devices transmits the response signal is shifted. As shown in Fig. 7, the master device transmits the response request signal to the slave devices A, B, --- to X at every predetermined communication slot.

In the example shown in Fig. 7, because there is a slave device which cannot receive the packet signal from the master device (for example, the slave device C (not shown), the initial connection has not completed, and the master device transmits the response request signals repeatedly. Further, though not shown in FIG. 7, the standby request signal described in the first embodiment (in the step S204 in Fig. 3) is transmitted from the master device between the response request signal in this cycle and the response request signal in the next cycle.

Further, in the example shown in Fig. 7, a value of the above-described predetermined interval Δt1 is zero, and there is a magnitude relation of the predetermined intervalsΔt1, Δt2, ---, to Δtx is Δt1 < Δt2 < ---, <Δtx. As described above, lengths of the predetermined intervals Δt1, Δt2, ---, Δtx are different each other. This prevents collision of the response signals transmitted from the slave devices A, B, ---, to X from the master device. As a result, the master device side can surly receive the response signals from the slave devices A, B, ---, to X.

As described, similar to shifting the transmission timing of the response signals at the slave devices A, B, --- to X, it is also possible to shift timing of transmitting predetermined data to the master device at the slave devices A, B, --- to X after completion of the communication establishment process. More specifically, it is also possible to set intervals from the reception of the predetermined data request signal from the master device to transmission of data corresponding to the data request signal to a different interval for each of the slave devices A, B, --- to X after completion of the communication establishment process described in the first embodiment. This prevents collision (interference) between the data transmitted from the slave devices A, B, --- to X to the master device.

### <Advantageous effect>

According to the present embodiment, the response signals and predetermined data are transmitted at different timing from the slave devices A, B, --- to X to the master device. This prevents collisions of signals (response signal and data) transmitted from the slave device A, B,--, to X.

### «Modification»

Embodiments regarding the wireless communication system 100 according to the present invention have been described. The present invention is not limited to the above-described embodiments and there are various modifications.

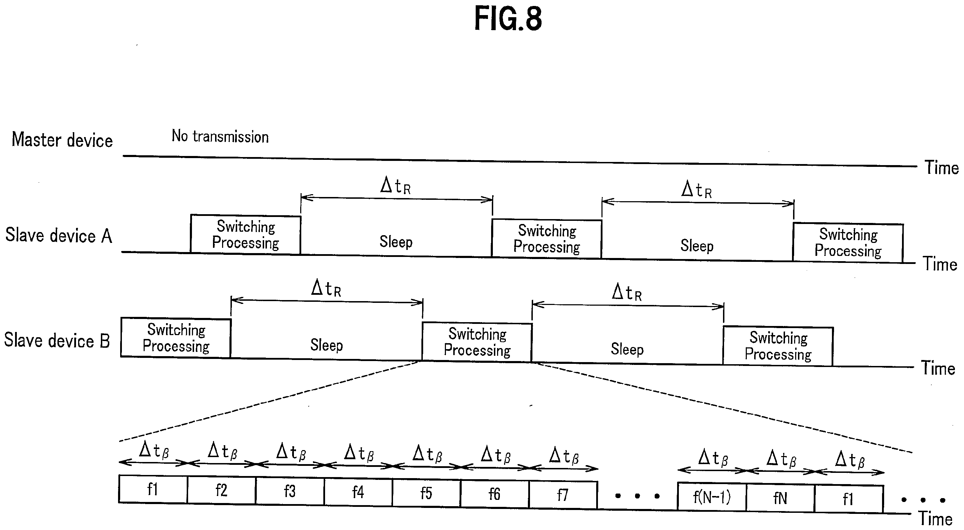

Fig. 8 is a time chart of the wireless communication between the master device and the slave devices A, B.

Fig. 8 indicates a state in which the master device has not started the communication establishment process described in the first embodiment yet, i.e., a state in which the master device has not been started up), and thus any packet signal has not been transmitted by the master device. On the other hand, for example, the slave devices A, B are set to repeat the switching process of the receiving frequency at shipping from a factory.

As shown in Fig. 8, the slave devices A, B are set to alternately repeat the switching process of the frequency between f1, f2, ---, to N and the sleeping for a second predetermined interval Δt_{R}. Further, while the communication communication establishment process is performed between the master device and the slave devices A, B, on the side of the slave devices A, B, the switching process of the frequency and the sleeping are repeated alternately. Such an intermittent reception is made, which can reduce the power consumption of the slave devices A, B. Accordingly, this suppresses decrease in the charged quantity of the battery cell c (see Fig. 2) supplying electric powers to the slave devices A, B even when the master device has not started up or the master device has not been able to transmit the packet signal due to an error in the master device.

Further, in the switching process of the frequency at the slave devices A, B, as shown in Fig. 8, it is also possible to perform the switching between the frequencies f1, f2, ---, to fN plural times.

Further, in the first embodiment, descriptions have been made for a configuration in which the switching process of the frequency (the steps S312 to S315) is immediately performed on the side of the slave devices A, B when the response request signal from the master device has not been received. However, the present invention is not limited to this. More specifically, when the response request signal cannot be received even when a "third predetermined interval" has passed from reception of the packet signal from the master device, it is also possible that the slave devices A, B alternately repeat the switching process of the frequency and the sleeping . This reduces the power consumptions in the slave devices A, B.

In the first embedment, descriptions have been made for the process of determining that the initial connection has completed by the master device (the step S206) when the response signals from the all slave devices are received (Yes in the step S203 in Fig. 3). However, the present invention is not limited to this. More specifically, when there is one or more of slave devices which does not transmit the response signal at all of the frequencies f1, f2, --- to fN, it is also possible that the master device specifies the frequency at which a larger number of the slave devices out of the slave devices transmit the response signals and establishes the communication at the specified frequency, and determine that the slave device which did not transit the response signal, is "failed". This can establish the communication between the master device with the normal slave devices even when there is a failed slave device.

Further, in the above-described configuration, it is also possible to transmit the identification information of the failure slave device to the host system controller 3 from the master device. This makes it possible to know the failed slave device on the side of the manager of the wireless communication system 100 and perform repair.

Further, in each of the embodiments, the descriptions have been made for the configurations in which the host system controller 3 and the master device are wire-connected through the wiring K (see Fig. 1). However, the present invention is not limited to this. More specifically, it is also possible to connect the host system controller 3 and the master device wirelessly.

Further, in the configuration in which the wireless communication system includes a plurality of the battery controllers 2, it is also possible to use the host system controller 3 as a master device and a plurality of the battery controllers 2 as slave devices to perform the communication communication establishment process. In other words, the wireless communication system may have a hierarchical configuration having a plurality of stages. The communication establishment process between each of devices is the same as that in the first embodiment.

Further, it is also possible to omit the host system controller 3 from the first embodiment, and, for example, the master device may starts up the communication communication establishment process by a predetermined switching operation.

Further, in each of the embodiments, the processes in which the master device transmits the packet signals to each of the slave devices and each of the slave devices performs the switching process of the receiving frequency, have been described. However, the present invention is not limited to this. For example, it is also possible to establish the communication by a plurality of slave devices transmitting the packet signals to the master device while switching the frequency at the first cycle Δt_{α} and the master device performing switching operation of the receiving frequency at a second cycle Δt_{β} (<Δt_{α}). In this configuration, each of the slave devices includes a real time clock and setting is made that timing of transmitting the packet signal from the slave device to the master device is different from each other. This prevents collision between the packet signals transmitted from respective slave devices.

Further, the embodiments may be combined suitably. For example, in a configuration provided by combining the second embodiment and the third embodiment in which each of the slave devices alternately performs the switching process of the receiving frequency (see Fig. 8), it is also possible to set time from reception of the response request signal to transmission of the response signal to different predetermined intervals (see Fig. 7).

Further, the wireless communication system 100 (see Fig. 1) for managing a plurality of cell groups has be described in each of the embodiments. However, the present invention is not limited to this. More specifically, the wireless communication system 100 can be applied to a battery system for in-vehicle use, a high voltage battery system for railway use or industrial use, a battery logistic management system, an article management system, a sensor net system, etc.

### DESCRIPTION OF REFERENCE SYMBOLS

- 100: wireless communication system
- 1A, --- 1X: cell controller (slave device)
- 2: battery controller (master device)
- 3: host system controller (controller)
- 11: measuring device
- c: battery cell

## Claims

1. A wireless communication system comprising:
a master device and a plurality of slave devices capable of wireless communication with the master device,
wherein a plurality of frequencies for wireless communication between the master device and the slave devices are set to each of the master device and the slave devices ;
wherein as a communication establishment process for establishing communication between the master device and each of the slave devices,
the master device wirelessly transmits a packet signal (S201) to each of the slave devices, while switching is made among a plurality of the frequencies at a first cycle;
each of the slave devices performs a switching process (S301, S303, S305) of switching among a plurality of the frequencies usable as an own receiving frequency at a second cycle shorter than the first cycle until the slave device can receive the packet signal from the master device;
upon reception of the packet signal from the master device, each of the slave devices wirelessly transmits a response signal (S309) to the master device in response to the response request signal (S202) from the master device after the reception of the packet signal; and
when the master device receives the response signal from each of the slave devices, the master device determines (S206) that the communication has established with each of the slave devices.

2. The wireless communication system as claimed in claim 1, wherein when the slave device receives the packet signal from the master device at a predetermined frequency, the slave device continuously uses the predetermined frequency as the own receiving frequency at least until the slave device receives the response request signal from the master device.

3. The wireless communication system as claimed in claim 1, wherein in the communication establishment process, when there is one of the slave devices which has not transmitted the response signal, the master device transmits to the slave devices having transmitted the response signals a standby request signal for requesting to perform the switching process again in preparation for receiving the packet signal.

4. The wireless communication system as claimed in claim 3, wherein in the communication establishment process, when one of the slave devices having transmitted the response signal, transmits the response signal and then performs sleeping for a first predetermined interval and then, receives the standby request signal at the frequency at which the response signal was transmitted.

5. The wireless communication system as claimed in claim 1, wherein an interval from reception of the response request signal to transmission of the response signal is set to a different time length among the slave devices.

6. The wireless communication system as claimed in claim 1, wherein after completion of the communication establishment process, an interval from reception of a predetermined data request signal from the master device to transmission of the data corresponding to the data request signal are set to a different time length among the slave devices.

7. The wireless communication system as claimed in claim 1, wherein the slave device alternately repeats the switching process and the sleeping for a second predetermined interval.

8. The wireless communication system as claimed in claim 1, wherein the slave device alternately repeats the switching process and the sleeping when the slave device does not receive the response request signal though a third predetermined interval has passed from the reception of the packet signal from the master device.

9. The wireless communication system as claimed in claim 1, wherein when there is one of the slave devices which has not transmitted the response signal at all of the frequencies, the master device specifies one of the frequencies at which the number of slave devices which transmitted the response signal, is largest, establishes communication at the one of the frequencies, and determines that the slave device which has not transmitted the response signal at all of the frequencies is failed.

10. The wireless communication system as claimed in claim 1, further comprises a controller connected to the master device by wire or wirelessly, wherein the master device performs the communication establishment process in response to a command from the controller.

11. The wireless communication system as claimed in any one of claims 1 to 10, wherein a plurality of the slave devices comprise cell controllers and the master device comprises a battery controller each obtaining data including measurement value by performing the wireless communication with the cell controller.

## Patentansprüche

1. Drahtloses Kommunikationssystem, das Folgendes umfasst:
eine Master-Vorrichtung und mehrere Slave-Vorrichtungen, die mit der Master-Vorrichtung drahtlos kommunizieren können,
wobei für die Master-Vorrichtung und für jede der Slave-Vorrichtungen mehrere Frequenzen für die drahtlose Kommunikation zwischen der Master-Vorrichtung und den Slave-Vorrichtungen festgelegt sind,
wobei in einem Kommunikationsaufbauprozess zum Aufbauen einer Kommunikation zwischen der Master-Vorrichtung und jeder der Slave-Vorrichtungen
die Master-Vorrichtung ein Paketsignal drahtlos an jede der Slave-Vorrichtungen sendet (S201), während zwischen mehreren der Frequenzen gemäß einem ersten Zyklus geschaltet wird,
jede der Slave-Vorrichtungen einen Schaltprozess zum Schalten zwischen mehreren der Frequenzen, die als eine eigene Empfangsfrequenz verwendet werden können, gemäß einem zweiten Zyklus, der kürzer als der erste Zyklus ist, ausführt (S301, S303, S305) bis die Slave-Vorrichtung das Paketsignal von der Master-Vorrichtung empfangen kann,
jede der Slave-Vorrichtungen bei Empfang des Paketsignals von der Master-Vorrichtung als Reaktion auf das Antwortanforderungssignal (S202) von der Master-Vorrichtung nach dem Empfang des Paketsignals ein Antwortsignal drahtlos an die Master-Vorrichtung sendet (S309), und
die Master-Vorrichtung dann, wenn sie das Antwortsignal von jeder der Slave-Vorrichtungen empfängt, bestimmt (S206), das die Kommunikation mit jeder der Slave-Vorrichtungen aufgebaut worden ist.

2. Drahtloses Kommunikationssystem nach Anspruch 1, wobei dann, wenn die Slave-Vorrichtung das Paketsignal von der Master-Vorrichtung bei einer vorgegebenen Frequenz empfängt, die Slave-Vorrichtung die vorgegebene Frequenz als die eigene Empfangsfrequenz ununterbrochen zumindest so lange verwendet, bis die Slave-Vorrichtung das Antwortanforderungssignal von der Master-Vorrichtung empfängt.

3. Drahtloses Kommunikationssystem nach Anspruch 1, wobei in dem Kommunikationsaufbauprozess dann, wenn eine der Slave-Vorrichtungen das Antwortsignal nicht gesendet hat, die Master-Vorrichtung an die Slave-Vorrichtungen, die die Antwortsignale gesendet haben, ein Bereitschaftsanforderungssignal sendet, um zu einer erneuten Ausführung des Schaltprozesses in Vorbereitung des Empfangs des Paketsignals aufzufordern.

4. Drahtloses Kommunikationssystem nach Anspruch 3, wobei in dem Kommunikationsaufbauprozess dann, wenn eine der Slave-Vorrichtungen, die das Antwortsignal gesendet haben, das Antwortsignal sendet, anschließend für ein erstes vorgegebenes Intervall schläft und dann das Bereitschaftsanforderungssignal bei der Frequenz, bei der das Antwortsignal gesendet wurde, empfängt.

5. Drahtloses Kommunikationssystem nach Anspruch 1, wobei ein Intervall von dem Empfang des Antwortanforderungssignal zu dem Senden des Antwortsignal unter den Slave-Vorrichtungen auf unterschiedliche Zeitdauern eingestellt wird.

6. Drahtloses Kommunikationssystem nach Anspruch 1, wobei nach Abschluss des Kommunikationsaufbauprozesses ein Intervall von dem Empfang eines vorgegebenen Datenanforderungssignals von der Master-Vorrichtung zu dem Senden der Daten, die dem Datenanforderungssignal entsprechen, unter den Slave-Vorrichtungen auf unterschiedliche Zeitdauern eingestellt wird.

7. Drahtloses Kommunikationssystem nach Anspruch 1, wobei die Slave-Vorrichtung den Schaltprozess und das Schlafen während eines zweiten vorgegebenen Intervalls abwechselnd wiederholt.

8. Drahtloses Kommunikationssystem nach Anspruch 1, wobei die Slave-Vorrichtung den Schaltprozess und das Schlafen abwechselnd wiederholt, wenn die Slave-Vorrichtung das Antwortanforderungssignal nicht empfängt, obwohl ein drittes vorgegebenes Intervall seit dem Empfang des Paketsignals von der Master-Vorrichtung verstrichen ist.

9. Drahtloses Kommunikationssystem nach Anspruch 1, wobei dann, wenn eine der Slave-Vorrichtungen das Antwortsignal auf keiner Frequenz gesendet hat, die Master-Vorrichtung eine der Frequenzen, auf der die Anzahl von Slave-Vorrichtungen, die das Antwortsignal gesendet haben, am größten ist, spezifiziert, die Kommunikation auf der einen der Frequenzen aufbaut und feststellt, dass die Slave-Vorrichtung, die das Antwortsignal auf keiner Frequenz gesendet hat, fehlerhaft ist.

10. Drahtloses Kommunikationssystem nach Anspruch 1, das ferner eine Steuereinheit umfasst, die mit der Master-Vorrichtung drahtgebunden oder drahtlos verbunden ist, wobei die Master-Vorrichtung den Kommunikationsaufbauprozess in Reaktion auf einen Befehl von der Steuereinheit ausführt.

11. Drahtloses Kommunikationssystem nach einem der Ansprüche 1 bis 10, wobei mehrere der Slave-Vorrichtungen Zellen-Steuereinheiten enthalten und die Master-Vorrichtung eine Batterie-Steuereinheit enthält, wovon jede Daten erhält, die Messwerte durch Ausführen der drahtlosen Kommunikation mit der Zellen-Steuereinheit enthalten.

## Revendications

1. Système de communication sans fil comprenant :
un dispositif maître et une pluralité de dispositifs esclaves capables de communiquer sans fil avec le dispositif maître,
dans lequel une pluralité de fréquences pour la communication sans fil entre le dispositif maître et les dispositifs esclaves sont fixées à chacun des dispositifs maître et esclaves ;
dans lequel, en tant que processus d'établissement de communication pour établir la communication entre le dispositif maître et chacun des dispositifs esclaves,
le dispositif maître transmet sans fil un signal par paquets (S201) à chacun des dispositifs esclaves, tandis qu'une commutation est effectuée parmi une pluralité des fréquences à un premier cycle ;
chacun des dispositifs esclaves effectue un processus de commutation (S301, S303, S305) consistant à effectuer une commutation parmi une pluralité de fréquences utilisables comme fréquence de réception propre à un deuxième cycle plus court que le premier cycle, jusqu'à ce que le dispositif esclave puisse recevoir le signal par paquets du dispositif maître ;
à la réception du signal par paquets du dispositif maître, chacun des dispositifs esclaves transmet sans fil un signal de réponse (S309) au dispositif maître en réponse au signal de demande de réponse (S202) du dispositif maître après la réception du signal par paquets ; et
lorsque le dispositif maître reçoit le signal de réponse de chacun des dispositifs esclaves, le dispositif maître détermine (S206) que la communication a été établie avec chacun des dispositifs esclaves.

2. Système de communication sans fil selon la revendication 1, dans lequel, lorsque le dispositif esclave reçoit le signal par paquets du dispositif maître à une fréquence prédéterminée, le dispositif esclave utilise continuellement la fréquence prédéterminée comme sa propre fréquence de réception au moins jusqu'à ce que le dispositif esclave reçoive le signal de demande de réponse du dispositif maître.

3. Système de communication sans fil selon la revendication 1, dans lequel, dans le processus d'établissement de communication, lorsque l'un des dispositifs esclaves n'a pas transmis le signal de réponse, le dispositif maître transmet aux dispositifs esclaves ayant transmis les signaux de réponse un signal de demande d'attente pour demander d'effectuer à nouveau le processus de commutation en préparation à la réception du signal par paquets.

4. Système de communication sans fil selon la revendication 3, dans lequel, dans le processus d'établissement de communication, lorsque l'un des dispositifs esclaves ayant transmis le signal de réponse, transmet le signal de réponse, effectue ensuite une mise en sommeil pendant un premier intervalle prédéterminé, puis reçoit le signal de demande d'attente à la fréquence à laquelle le signal de réponse a été transmis.

5. Système de communication sans fil selon la revendication 1, dans lequel un intervalle entre la réception du signal de demande de réponse et la transmission du signal de réponse est fixé à une durée différente parmi les dispositifs esclaves.

6. Système de communication sans fil selon la revendication 1, dans lequel, après achèvement du processus d'établissement de communication, un intervalle entre la réception d'un signal de demande de données prédéterminé provenant du dispositif maître et la transmission des données correspondant au signal de demande de données est fixé à une durée différente parmi les dispositifs esclaves.

7. Système de communication sans fil selon la revendication 1, dans lequel le dispositif esclave répète alternativement le processus de commutation et la mise en sommeil pendant un deuxième intervalle prédéterminé.

8. Système de communication sans fil selon la revendication 1, dans lequel le dispositif esclave répète alternativement le processus de commutation et la mise en sommeil lorsque le dispositif esclave ne reçoit pas le signal de demande de réponse bien qu'un troisième intervalle prédéterminé se soit écoulé depuis la réception du signal par paquets provenant du dispositif maître.

9. Système de communication sans fil selon la revendication 1, dans lequel, lorsque l'un des dispositifs esclaves n'a pas transmis le signal de réponse à toutes les fréquences, le dispositif maître spécifie une des fréquences à laquelle le nombre de dispositifs esclaves qui ont transmis le signal de réponse est le plus élevé, établit la communication à cette fréquence et détermine que le dispositif esclave qui n'a pas transmis le signal de réponse à toutes les fréquences est défaillant.

10. Système de communication sans fil selon la revendication 1, comprenant en outre un dispositif de commande connecté au dispositif maître par fil ou sans fil, dans lequel le dispositif maître effectue le processus d'établissement de communication en réponse à un ordre provenant du dispositif de commande.

11. Système de communication sans fil selon l'une quelconque des revendications 1 à 10, dans lequel une pluralité de dispositifs esclaves comprend des dispositifs de commande de cellule et le dispositif maître comprend un dispositif de commande de batterie, chacun obtenant des données, y compris des valeurs de mesure, en effectuant la communication sans fil avec le dispositif de commande de cellule.
